## Europäisches Patentamt

## European Patent Office

## Office européen des brevets

(19)

(11) Numéro de publication: **0 237 373**
**B1**

(12) **FASCICULE DE BREVET EUROPÉEN**

(45) Date de publication du fascicule du brevet:
27.12.89

(51) Int. Cl.⁴: **F 16 F 15/12**, F 16 D 13/70

(21) Numéro de dépôt: **87400228.0**

(22) Date de dépôt: **02.02.87**

(54) **Volant amortisseur pour transmission, notamment pour véhicule automobile.**

(30) Priorité: **05.02.86 FR 8601560**

(43) Date de publication de la demande:
**16.09.87 Bulletin 87/38**

(45) Mention de la délivrance du brevet:
**27.12.89 Bulletin 89/52**

(84) Etats contractants désignés:
**DE FR GB**

(56) Documents cité:
**GB-A-2 151 332**

(73) Titulaire: **VALEO, 64 Avenue de la Grande Armée, F-75017 Paris (FR)**

(72) Inventeur: **Chasseguet, Gustave, 2 Avenue du Tournevent, F-95150 Taverny (FR)**
Inventeur: **Paquin, Jacques, 83 Avenue de Verdun, F-92390 Villeneuve- la- Garenne (FR)**

(74) Mandataire: **CABINET BONNET- THIRION, 95 Boulevard Beaumarchais, F-75003 Paris (FR)**

## Description

La présente invention concerne d'une manière générale les volants pour transmission, du type de ceux constituant usuellement une pièce d'inertie dans les embrayages, notamment dans les embrayages destinés à l'équipement des véhicules automobiles.

Elle vise plus particulièrement ceux de ces volants, ou volants amortisseurs, au sein desquels sont incorporés des moyens d'amortissement à l'égard d'éventuels couples de torsion.

Ainsi qu'on le sait, en effet, pour filtrer les vibrations susceptibles de prendre naissance tout au long de la chaîne cinématique que constitue une transmission, chaîne cinématique qui, sur un véhicule automobile, va du moteur aux arbres de roue, il est usuel d'insérer, dans une telle transmission, un dispositif amortisseur de torsion.

Le plus souvent, ce dispositif amortisseur de torsion est incorporé au disque de friction de l'embrayage.

Mais, en variante, ou en complément, il a déjà été également proposé d'incorporer un tel dispositif amortisseur de torsion au volant, pour certaines applications particulières, notamment pour les véhicules dont le moteur développe un couple relativement notable aux faibles régimes de rotation, pour lesquels une minimisation des bruits de "trash", c'est-à-dire des bruits apparaissant sous couple, doit être plus particulièrement recherchée.

C'est le cas, par exemple, pour le volant amortisseur faisant l'objet de la demande de brevet allemand No 2 931 423.

Globalement, un tel volant amortisseur comporte deux parties coaxiales montées rotatives l'une par rapport à l'autre, à savoir, en pratique, une première partie, qui comporte annulairement, à distance l'un de l'autre, deux flasques, et une deuxième partie, qui, entre lesdits flasques, comporte annulairement un voile, avec, susceptibles d'intervenir entre lesdites parties, d'une part, des moyens élastiques à action circonférentielle, à savoir, en pratique, des organes élastiques à action circonférentielle, qui, chacun individuellement, sont disposés dans des logements ménagés pour eux dans lesdits flasques, et avec lesquels sont aptes à interférer des bras appartenant audit voile, avec un jeu circonférentiel entre lesdits organes élastiques et lesdits bras, et, d'autre part, des moyens de frottement.

En pratique, dans les réalisations proposées, ces moyens de frottement sont de deux types.

Il y a tout d'abord des moyens de frottement qui interviennent dès le début du débattement angulaire entre les deux parties coaxiales concernées et tout au long de ce débattement angulaire, et qui sont d'ailleurs les seuls éléments à intervenir entre ces parties coaxiales au cours d'une première portion de leur dit débattement angulaire, les organes élastiques prévus entre ces parties coaxiales n'intervenant, eux, qu'au cours d'une deuxième portion de ce dernier.

Il y a ensuite des moyens de frottement, auxquels correspond un couple beaucoup plus élevé que le couple, relativement modéré, correspondant aux moyens de frottement précédents, et qui, intervenant en pratique en série avec les autres constituants du volant amortisseur, constituent en fait un limiteur de couple, ce limiteur de couple ayant en pratique à charge d'absorber, en introduisant un glissement, les éventuels surcouples susceptibles de se développer par résonance entre les deux parties coaxiales concernées lors des oscillations relatives de celles-ci, notamment au démarrage ou à l'arrêt.

Un tel limiteur de couple a notamment pour inconvénient de devoir correspondre à un couple supérieur au couple moteur et d'être éventuellement à l'origine d'incidents de fonctionnement s'il se trouve endommagé, puisque, intervenant en série, le couple à transmettre doit transiter par lui.

La présente invention a d'une manière générale pour objet une disposition qui, tout en permettant l'absorption d'éventuels surcouples, est avantageusement exempte de ces inconvénients.

De manière plus précise, elle a pour objet un volant amortisseur pour transmission, notamment pour véhicule automobile, du genre comportant deux parties coaxiales montées rotatives l'une par rapport à l'autre, à savoir, une première partie, qui comporte annulairement, à distance l'un de l'autre, deux flasques, et une deuxième, qui, entre lesdits flasques, comporte annulairement un voile, avec, susceptibles d'intervenir entre lesdites parties coaxiales, d'une part, des moyens élastiques à action circonférentielle, et, d'autre part, des moyens de frottement, lesdits moyens de frottement comportant au moins une rondelle de frottement montée coulissante autour de l'axe de l'ensemble, ce volant amortisseur étant d'une manière générale caractérisé en ce que ladite rondelle de frottement est axialement disposée entre le voile appartenant à l'une des parties coaxiales concernées et une bride annulaire solidaire en rotation dudit voile, et propre à permettre, en coopération avec ce dernier, l'intervention des moyens de frottement auxquels elle appartient, et en ce qu'elle est montée librement coulissante autour de l'axe de l'ensemble, sans qu'il y ait, de manière concomitante, compression des moyens élastiques à action circonférentielle, avec des moyens d'engagement circonférentiel à jeu entre elle et l'un des flasques appartenant à l'autre desdites parties coaxiales.

Ainsi, ces moyens de frottement interviennent systématiquement au cours du débattement angulaire entre les deux parties coaxiales concernées, au-delà d'une certaine valeur de ce débattement angulaire, et bien que le couple qui leur correspond soit effectivement avantageusement fixé à une valeur inférieure à celle du couple moteur, ils sont à même d'absorber d'éventuels surcouples, en intervenant alors non plus en série par rapport aux autres constituants du volant amortisseur, et notamment des organes élastiques à action circonférentielle intervenant entre ces deux parties coaxiales, mais en parallèle par rapport à ceux-ci.

Le couple à transmettre ne transitant dès lors pas par ces moyens de frottement, il n'en résulte pas un incident rédhibitoire de fonctionnement s'ils se trouvent être l'objet d'une quelconque éventuelle détérioration.

La sécurité de fonctionnement de l'ensemble en est avantageusement accrue.

Certes, il est décrit, dans le document GB-A-2 151 332, un volant amortisseur dans lequel un dispositif de frottement, qui comporte une rondelle, est monté coulissant autour de l'axe de l'ensemble, entre deux organes, en l'espèce deux flasques, appartenant à une même des deux parties coaxiales concernées.

Mais, dans ce document GB-A-2 151 332, il y a un rappel systématique en position de repos de ce dispositif de frottement par les ressorts prévus par ailleurs entre ces deux parties coaxiales, ce qui implique que, lors de son mouvement angulaire, pour une partie au moins de celui-ci, ce dispositif de frottement interfère avec ces ressorts.

Ainsi, une partie au moins du mouvement angulaire de ce dispositif de frottement se fait à l'encontre de ces ressorts, puis sous leur sollicitation.

Lorsqu'il se fait à l'encontre de ces ressorts, il y a compression de ceux-ci.

Et lorsqu'il se fait sous leur sollicitation, il y a restitution de l'énergie que ces ressorts ont précédemment emmagasinée lors de leur compression.

Lorsque, suivant l'invention, la rondelle de frottement mise en oeuvre est librement coulissante, son mouvement angulaire n'implique aucune compression des ressorts correspondants, ni, donc, aucune restitution ultérieure d'énergie.

L'amortissement recherché s'en trouve avantageusement plus rapide.

Les caractéristiques et avantages de l'invention ressortiront d'ailleurs de la description qui va suivre, à titre d'exemple, en référence aux dessins schématiques annexés sur lesquels:

la figure 1 est, avec un arrachement local, une vue partielle en élévation d'un volant amortisseur suivant l'invention, suivant la flèche I de la figure 2;

la figure 2 en est une vue partielle en coupe axiale suivant la ligne II-II de la figure 1;

la figure 3 est une vue partielle en perspective éclatée de certains des constituants de ce volant amortisseur.

Tel qu'illustré sur ces figures, le volant amortisseur suivant l'invention comporte, globalement, deux parties coaxiales A, B montées rotatives l'une par rapport à l'autre.

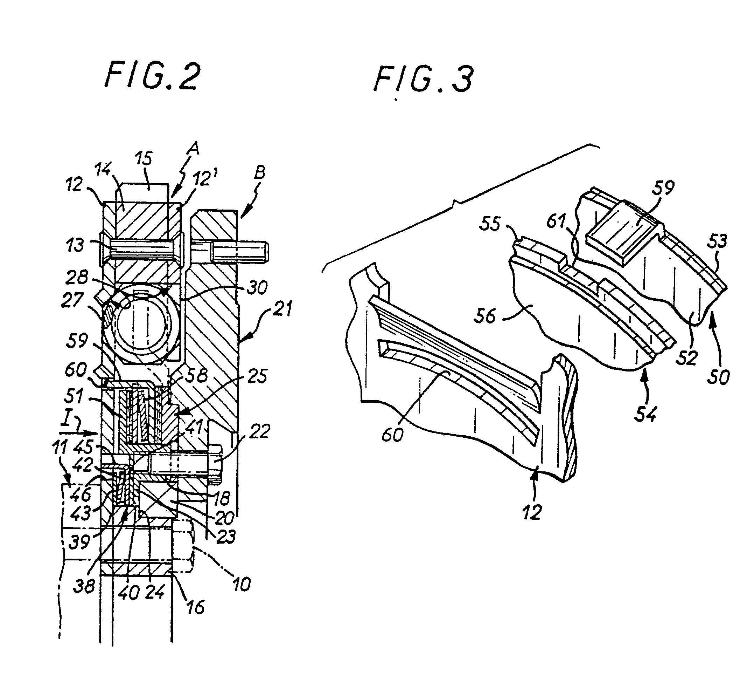

Par des vis 10, schématisées en traits interrompus à la figure 2, la partie A, ou partie d'entrée, est destinée à être solidarisée à un arbre 11, en pratique un arbre menant, par exemple l'arbre de sortie, ou vilebrequin, du moteur, dans le cas de l'équipement d'un véhicule automobile.

Cette partie A comporte, annulairement, autour de l'axe de l'ensemble, et à distance l'un de l'autre, deux flasques 12, 12'.

Par leur périphérie externe, ou de plus grand diamètre, ces flasques 12, 12' ont sensiblement même développement radial, et ils sont solidarisés l'un à l'autre, par exemple par des rivets 13, tel que représenté, avec insertion, entre eux, d'une entretoise annulaire 14.

Dans la forme de réalisation représentée, cette entretoise annulaire 14 présente une denture 15 à sa périphérie externe, et elle constitue donc par elle-même une couronne de démarreur pour l'ensemble.

Par leur périphérie interne, ou de plus petit diamètre, les flasques 12, 12' ont par contre des extensions radiales différentes: alors que le flasque 12 s'étend largement en direction de l'axe de l'ensemble, le flasque 12' s'arrête largement à distance de celui-ci.

A la périphérie interne du flasque 12 est accolée à celui-ci, du même côté que le flasque 12', une rondelle annulaire 16, qui, traversée, comme ledit flasque 12, par les vis 10, se trouve solidarisée à ce flasque 12 par ces dernières.

La partie B, ou partie de sortie, comporte, globalement, quant à elle, d'une part, un moyeu 18, qui entoure la rondelle 16 de la partie A, avec interposition, entre lui et cette dernière, d'un roulement 20, et, d'autre part, un flasque 21, qui, par des vis 22, est rapporté sur ledit moyeu 18 et est ainsi solidarisé en rotation à celui-ci.

Par ce flasque 21, qui, pour l'essentiel, s'étend à l'extérieur du volume défini par les flasques 12, 12' de la partie A, le volant amortisseur suivant l'invention est adapté à pouvoir servir de plateau de réaction pour un disque de friction, non représenté, et être ainsi solidarisé en rotation, par frottement, à ce disque de friction, alors même que le moyeu de celui-ci est solidaire en rotation d'un deuxième arbre, en pratique un arbre mené, par exemple l'arbre d'entrée d'une boîte de vitesses dans le cas, plus particulièrement, concerné, de l'équipement d'un véhicule automobile.

Le roulement 20 se trouve calé axialement entre ce flasque 21 et un épaulement transversal 23 du moyeu 18.

Il se trouve en outre axialement en appui contre un épaulement transversal 24 de la rondelle 16, du côté opposé au flasque 21.

La partie B comporte en outre, annulairement, entre les flasques 12, 12' de la partie A, un voile 25.

En pratique, dans la forme de réalisation représentée, ce voile 25 est axialement pincé entre le moyeu 18 et le flasque 21, et il se trouve solidarisé en rotation à ceux-ci par les vis 22 qui les relient.

Entre les parties coaxiales A, B ainsi constituées sont susceptibles d'intervenir, d'une part, des moyens élastiques à action circonférentielle, et, d'autre part, des moyens de frottement.

Dans la forme de réalisation représentée, ces moyens élastiques à action circonférentielle comportent des organes élastiques à action circonférentielle 27, qui, en pratique, au nombre de cinq, sont, chacun individuellement, disposés dans les logements 28 ménagés pour eux dans la partie A, et, plus précisément, dans les flasques 12, 12' que comporte celle-ci, ces logements 28 résultant pour l'essentiel de fenêtres ménagées à cet effet dans la zone médiane du flasque 12 et d'échancrures également ménagées à cet effet à la périphérie interne du flasque 12'.

En outre, dans la forme de réalisation représentée, il résulte également d'échancrures ménagées à la périphérie interne de l'entretoise annulaire 14, en correspondance avec celles ménagées dans le flasque 12'.

En pratique, dans la forme de réalisation représentée, les organes élastiques à action circonférentielle 27 sont des ressorts du type ressort à boudin, tous allongés sensiblement tangentiellement à une même circonférence de l'ensemble, et, à leurs extrémités circonférentielles, ils sont en appui sur des embouts ou coupelles 30, qui sont circonférentiellement interposés entre eux et les bords radiaux 31 des logements 28 dans lesquels ils sont disposés, et qui, du côté desdits bords radiaux, présentent chacun individuellement, en creux, une cuvette 32 à concavité tournée vers un tel bord radial 31.

Du côté opposé aux bords radiaux 31 des logements 28, ces embouts 30 portent, chacun, circonférentiellement en saillie, dans la forme de réalisation représentée, un tampon en matière élastique 33.

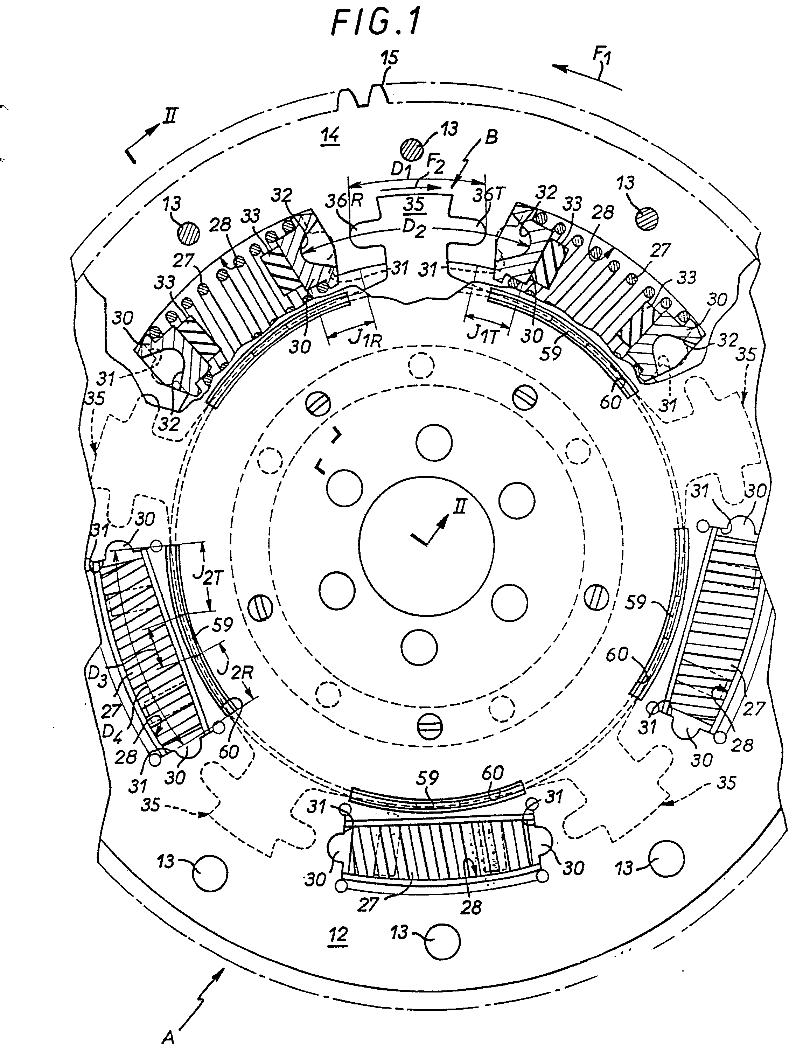

Pour la configuration de repos de l'ensemble, qui est celle représentée à la figure 1, les embouts 30 sont au contact des bords radiaux 31 des logements 28, sous la sollicitation des organes élastiques à action circonférentielle 27 qui s'étendent entre eux, et, éventuellement, ceux-ci sont alors sous précontrainte.

Avec les organes élastiques à action circonférentielle 27 sont aptes à interférer des bras 35 appartenant au voile 25, ces bras 35 s'étendant radialement à compter de celui-ci, en direction opposée à l'axe de l'ensemble, en étant chacun individuellement disposés entre deux successifs de tels organes élastiques à action circonférentielle 27.

En pratique, les bras 35 présentent chacun deux plis en dièdre, d'orientations opposées, de manière à ce que leur partie active, celle par laquelle ils sont destinés à interférer avec les organes élastiques à action circonférentielle 27, s'étende à mi-distance entre les flasques 12, 12' de la partie A, au droit de la partie médiane desdits organes élastiques à action circonférentielle 27.

En pratique, également, les bras 35 que comporte ainsi le voile 25 présentent chacun, circonférentiellement en saillie en directions opposées l'un par rapport à l'autre, deux doigts 36T, 36R, le doigt 36T s'étendant dans le sens circonférentiel supposé correspondre à un fonctionnement de l'ensemble, dit fonctionnement en "tirage", pour lequel se développe une évolution croissante du couple de rotation transmis d'une des parties coaxiales A, B à l'autre, tandis que le doigt 36R s'étend dans le sens circonférentiel opposé au précédent, et supposé, lui, correspondre à un fonctionnement en "rétro" dudit ensemble pour lequel l'évolution dudit couple est au contraire décroissante.

En pratique, entre les organes élastiques à action circonférentielle 27 et les bras 35, il est globalement prévu un jeu circonférentiel J1, qui, pour la configuration de repos de l'ensemble, se répartit en J1T, du côté des doigts 36T, et en J1R, du côté des doigts 36R, le jeu J1T étant en pratique mesuré entre l'extrémité d'un doigt 36T et le fond de la cuvette 32 de l'embout 30 correspondant, tandis que, de même, le jeu J1R est mesuré entre l'extrémité d'un doigt 36R et le fond de la cuvette 32 de l'embout 30 correspondant à celui-ci.

Les moyens de frottement susceptibles d'intervenir entre les parties coaxiales A, B comportent, corollairement, dans la forme de réalisation représentée, une rondelle de frottement 38, qui est formée d'une rondelle de support 39 et d'une garniture de friction 40 convenablement solidarisée à cette rondelle de support 39, par exemple par collage, et qui, par cette garniture de friction 40, est appliquée axialement contre un épaulement transversal 41 du moyeu 18 de la partie B, sous la sollicitation d'une rondelle élastique à action axiale 42 prenant appui, par l'intermédiaire d'une rondelle de répartition 43, sur le flasque 12 appartenant à la partie A.

Dans la forme de réalisation représentée, la rondelle élastique 42 est une rondelle du type rondelle Belleville.

Quoi qu'il en soit, par des pattes axiales 45, qui, prévues à cet effet à la périphérie externe de sa rondelle de support 39, sont engagées sans jeu dans des perçages 46 prévus pour elles dans le flasque 12, la rondelle de frottement 38 est calée en rotation sur la partie A.

Par sa garniture de friction 40 elle intervient donc entre les parties coaxiales A, B dès le début du débattement angulaire entre celles-ci, et son intervention se poursuit tout au long de ce débattement angulaire.

Ces dispositions sont bien connues par elles-mêmes, et ne faisant pas partie en soi de la présente invention, elles ne seront pas décrites plus en détail ici.

Suivant l'invention, les moyens de frottement susceptibles d'intervenir entre les parties coaxiales A, B comportent en outre au moins une rondelle de frottement 50 axialement disposée entre le voile 25 appartenant à la partie B et une bride annulaire 51 qui, solidaire en rotation de ce voile 25, s'étend axialement à distance de celui-ci, entre lui et l'un des flasques 12, 12' appartenant à la partie A, en pratique le flasque 12, avec des moyens d'engagement circonférentiel à jeu entre ladite rondelle de frottement 50 et ledit flasque 12.

Dans la forme de réalisation représentée, la bride 51 ainsi associée au voile 25 est d'un seul tenant avec le moyeu 18 sur lequel est calé en rotation ce voile 25, en s'étendant, comme lui, radialement en direction opposée à l'axe de l'ensemble à compter de ce moyeu 18.

En pratique, également, dans la forme de réalisation représentée, la rondelle de frottement 50 est constituée d'une rondelle de support 52 et d'une garniture de friction 53 qui est convenablement solidarisée à la rondelle de support 52, par exemple par collage, et par laquelle elle est appliquée contre le voile 25.

En variante, cependant, la garniture de friction 53 peut être libre en rotation par rapport à la rondelle 55 à laquelle elle est associée, cette dernière n'étant alors plus pour elle une rondelle de support mais une rondelle de répartition.

Quoi qu'il en soit, et suivant l'invention, la rondelle de frottement 50 est montée librement coulissante autour de l'axe de l'ensemble.

Dans la forme de réalisation représentée, entre le voile 25 et la bride 51, il y a, en fait, deux rondelles de frottement, à savoir, outre la rondelle de frottement 50 précédente, une rondelle de frottement 54, qui, comme la rondelle de frottement 50, est montée librement coulissante autour de l'axe de l'ensemble.

Comme la rondelle de frottement 50, cette deuxième rondelle de frottement 54 est constituée, dans la forme de réalisation représentée, d'une rondelle de support 55 et d'une garniture de friction 56, qui est convenablement solidarisée à cette rondelle de support 55, par exemple par collage, dans cette forme de réalisation, mais qui, comme précédemment, peut être libre, et, par cette garniture de friction 56, elle est appliquée contre la bride 51

Autrement dit, les rondelles de frottement 50, 54 sont disposées dos a dos, avec leurs rondelles de support 52, 55 en regard l'une de l'autre et leurs garnitures de friction 53, 56 en directions opposées l'une par rapport à l'autre.

Entre les rondelles de frottement 50, 54 ainsi constituées sont disposés des moyens élastiques à action axiale, pour leur application, l'une contre le voile 25, l'autre contre la bride 51.

Dans la forme de réalisation représentée, il s'agit d'une rondelle élastique 58 du type rondelle Belleville.

Corollairement, les moyens d'engagement circonférentiel à jeu prévus entre la rondelle de frottement 50 et le flasque 12 de la partie A comportent au moins une patte axiale 59, dont est solidaire en rotation cette rondelle de frottement 50, et un évidement 60, qui est ménagé dans ce flasque 12, et dans lequel est engagée, avec jeu, ladite patte axiale 59.

Dans la forme de réalisation représentée, la patte axiale 59 est d'un seul tenant avec la rondelle de support 52 de la rondelle de frottement 50, en s'étendant à compter de la périphérie externe de celle-ci, et, conjointement, la rondelle de frottement 54, et plus précisément sa rondelle de support 55, présente, à sa périphérie externe, au moins une échancrure 61 par laquelle elle est en

prise, sans jeu, avec une telle patte axiale 59.

Ainsi, les rondelles de frottement 50, 54 sont solidaires en rotation l'une de l'autre.

Corollairement, dans la forme de réalisation représentée, l'évidement 60 que présente le flasque 12 pour une patte axiale 59 de la rondelle de frottement 50 est une boutonnière allongée circulairement.

En pratique, dans la forme de réalisation représentée, il est ainsi prévu, régulièrement répartis circulairement, cinq pattes axiales 59 sur la rondelle de frottement 50, et cinq évidements 60 dans le flasque 12, et ces derniers, qui sont chacun en forme d'arc de cercle, sont chacun respectivement radialement disposés au droit des logements 28 des organes élastiques à action circonférentielle 27, sur une circonférence de diamètre inférieur à celle suivant laquelle s'étendent lesdits logements 28.

Soit, globalement, J2, le jeu circonférentiel des moyens d'engagement à jeu circonférentiel ainsi prévus entre la rondelle de frottement 50, et donc l'ensemble qu'elle constitue avec la rondelle de frottement 54, d'une part, et le flasque 12 de la partie A, d'autre part.

Pour la configuration de repos de l'ensemble, ce jeu circonférentiel J2 se répartit normalement en J2T, du côté des pattes axiales 59 de la rondelle de frottement 50 correspondant à un fonctionnement en "tirage" de l'ensemble, et en J2R, du côté opposé, c'est-à-dire du côté correspondant à un fonctionnement en "rétro" dudit ensemble.

De préférence, le jeu circonférentiel J2 est globalement au moins égal à celui prévu entre les organes élastiques à action circonférentielle 27 et les bras 35 du voile 25, de manière à ce que, tel que décrit ci-après, au cours du débattement angulaire entre les parties coaxiales A, B, et quel que soit le sens d'évolution de ce débattement angulaire, les rondelles de frottement 50, 54 n'interviennent au plus tôt qu'en même temps que lesdits organes élastiques à action circonférentielle 27.

Autrement dit, si l'on désigne par:

D1     la distance circonférentielle séparant circonférentiellement l'une de l'autre les extrémités des doigts 36T, 36R d'un bras 35,

D2     la distance circonférentielle séparant circonférentiellement l'un de l'autre le fond 32 des embouts 30 encadrant un tel bras 35,

D3     la distance circonférentielle séparant l'une de l'autre les tranches axiales d'une patte 59 de la rondelle de frottement 50, et

D4     la distance circonférentielle séparant l'une de l'autre les extrémités circonférentielles des évidements 60 du flasque 12, il y a, de préférence, entre les distances D1, D2, D3, D4 précédentes, la relation suivante:

(D4 - D3) > (D2 - D1)

En service, et si, pour un fonctionnement en "tirage" de l'ensemble, il est supposé que ledit ensemble tourne autour de son axe suivant le sens circonférentiel repéré par la flèche F1 sur la figure 1, il y a un déplacement angulaire relatif, ou autrement dit un débattement angulaire, entre les parties coaxiales A, B constitutives du volant amortisseur suivant l'invention, et tout se passe comme si, tel que schématisé par la flèche F2, la partie B se déplaçait angulairement, par rapport à la partie A, dans un sens circonférentiel opposé à celui repéré par la flèche F1 précédente.

Au cours d'une première phase, qui correspond aux faibles valeurs de ce débattement angulaire, seule intervient la rondelle de frottement 38, les parties coaxiales A, B glissant l'une par rapport à l'autre au niveau de la garniture de friction 40 de celle-ci.

Par contre, les rondelles de frottement 50, 54, solidarisées en rotation à la partie B par leurs garnitures de friction 53, 56, sont alors sans action.

Cette première phase de fonctionnement se poursuit jusqu'à ce que, le jeu angulaire J1T étant absorbé, le doigt 36T des bras 35 du voile 25 appartenant à la partie coaxiale B vienne en appui contre le fond de la cuvette 32 de l'embout 30 immédiatement en aval d'un tel bras 35 dans le sens circonférentiel concerné.

Dès lors, et le débattement angulaire entre les parties coaxiales A, B étant poursuivi, il y a, en plus, une compression circonférentielle des organes élastiques à action circonférentielle 27.

Cette deuxième phase de fonctionnement se poursuit elle-même jusqu'à ce qu'il y ait un entraînement positif de la partie B par la partie A, par venue en contact les uns avec les autres des tampons en matière élastique 33, avec éventuellement compression de ceux-ci.

Au cours de cette deuxième phase de fonctionnement, ou dès le début de celle-ci, le jeu circonférentiel J2T se trouve lui-même absorbé, et les pattes axiales 59 de la rondelle de frottement 50 viennent en butée circonférentielle contre l'extrémité circonférentielle correspondante des évidements 60 du flasque 12.

A compter de cet instant, les rondelles de frottement 50, 54, qui, jusqu'alors étaient liées en rotation, par frottement, grâce à leurs garnitures de friction 53, 56, à la partie B, se trouvent solidarisées en rotation, par les pattes axiales 59, à la partie A, et il en résulte le développement d'un couple de frottement entre elles et la partie B au contact de laquelle elles se trouvent, ou, autrement dit, entre les parties coaxiales A, B.

Par construction, ce couple de frottement est fait inférieur au couple moteur, mais suffisamment fort pour être en mesure d'absorber les éventuels surcouples.

Les deux phases de fonctionnement précédentes correspondent à une évolution croissante du couple transmis d'une des parties coaxiales A, B à l'autre, tel que cela est par exemple le cas lorsqu'une action est exercée dans ce sens sur l'accélérateur du véhicule concerné.

Si cette action est relâchée, le couple transmis d'une des parties coaxiales A, B à l'autre évolue de manière décroissante, et un processus inverse du précédent se développe, suivant un fonctionnement dit en "rétro" de l'ensemble.

Au repos, les bras 35 du voile 25 occupent une position quelconque entre les organes élastiques à action circonférentielle 27, et, de même, les pattes axiales 59 des rondelles de frottement 50, 54 occupent une position quelconque entre les extrémités circonférentielles des évidements 60 du flasque 12.

Ces rondelles de frottement 50, 54 étant par ailleurs montées librement coulissantes autour de l'axe de l'ensemble, leur intervention, en fonctionnement, se fait avantageusement sans qu'il y ait, de manière concomitante, compression d'un quelconque des organes élastiques à action circonférentielle 27, susceptible de restituer ultérieurement l'énergie qu'il a emmagasinée lors d'une telle compression, en sorte que le déplacement angulaire unilatéral momentané de ces rondelles de frottement 50, 54, pour un sens d'évolution du débattement entre les deux parties coaxiales A, B concernées, n'implique pas nécessairement leur retour élastique à leur position initiale, lorsque le sens d'évolution dudit débattement s'inverse. Au contraire, la position instantanée de ces rondelles de frottement 50, 54 résulte des conditions de fonctionnement antérieures et est donc quelconque.

L'expérience montre cependant que, en pratique, après fonctionnement, en régime stabilisé, c'est-à-dire après plusieurs oscillations angulaires, l'une par rapport à l'autre, des deux parties coaxiales A, B concernées, les pattes 59 de ces rondelles de frottement 50, 54 occupent, entre les extrémités circonférentielles des évidements 60 dans lesquels elles sont engagées, une position qui est à l'image de celle des bras 35 du voile 25 par rapport aux organes élastiques à action circonférentielle 27.

De ce fait, et du fait que, globalement, et tel que précisé ci-dessus, le jeu circonféretiel J2 est au moins égal au jeu circonférentiel J1, les rondelles de frottement 50, 54, en régime stabilisé, n'interviennent pas avant les organes élastiques à action circonférentielle 27, et le couple dû à ces rondelles de frottement 50, 54 ne risque donc pas d'oblitérer celui dû à la seule rondelle de frottement 38.

Bien entendu, la présente invention ne se limite pas à la forme de réalisation décrite et représentée, mais englobe toute variante d'exécution.

En particulier, une seule rondelle de frottement pourrait intervenir entre le voile appartenant à l'une des parties coaxiales concernées et une bride solidaire en rotation de ce voile, et / ou la patte axiale prévue entre une telle rondelle de frottement et un flasque appartenant à l'autre desdites parties coaxiales pourrait venir non de cette rondelle de frottement mais de ce flasque.

**Revendications**

1. Volant amortisseur pour transmission, notamment pour véhicule automobile, du genre comportant deux parties coaxiales (A, B) montées rotatives l'une par rapport à l'autre, à savoir, une première partie (A), qui comporte annulairement, à distance l'un de l'autre, deux flasques (12, 12'), et une deuxième (B), qui, entre lesdits flasques (12, 12'), comporte annulairement un voile (25), avec, susceptibles d'intervenir entre lesdites parties coaxiales (A, B), d'une part, des moyens élastiques à action circonférentielle, et, d'autre part, des moyens de frottement, lesdits moyens de frottement comportant au moins une rondelle de frottement (50) montée coulissante autour de l'axe de l'ensemble, *caractérisé en ce que* ladite rondelle de frottement (50) est axialement disposée entre le voile (25) appartenant à l'une des parties coaxiales (A, B) concernées et une bride annulaire (51) solidaire en rotation dudit voile (25), et propre à permettre, en coopération avec ce dernier, l'intervention des moyens de frottement auxquels elle appartient, et en ce qu'elle est montée librement coulissante autour de l'axe de l'ensemble, sans qu'il y ait, de manière concomitante, compression des moyens élastiques à action circonférentielle, avec des moyens d'engagement circonférentiel à jeu (59, 60) entre elle et l'un des flasques (12, 12') appartenant à l'autre desdites parties coaxiales (A, B).

2. Volant amortisseur suivant la revendication 1, *caractérisé en ce que* lesdits moyens d'engagement circonférentiel à jeu (59, 60) comportent au moins une patte axiale (59), dont est solidaire en rotation la rondelle de frottement (50) concernée, et un évidement (60), qui est ménagé dans l'un des flasques (12, 12') de la partie coaxiale (A) correspondante, et dans lequel est engagée avec jeu ladite patte axiale (59).

3. Volant amortisseur suivant la revendication 2, *caractérisé en ce que* l'évidement (60) que présente ledit flasque (12, 12') est une boutonnière allongée circulairement.

4. Volant amortisseur suivant l'une quelconque des revendications 1 à 3, *caractérisé en ce que*, entre le voile (25) appartenant à l'une des parties coaxiales (A, B) et la bride (51) qui lui est associée, il y a deux rondelles de frottement (50, 54), qui sont solidaires en rotation l'une de l'autre, et entre lesquelles sont disposés des moyens élastiques à action axiale.

5. Volant amortisseur suivant les revendications 2 et 4, prises conjointement, *caractérisé en ce que*, alors que l'une (50) des rondelles de frottement présente, à sa périphérie externe, au moins une patte axiale (59), l'autre (54) présente, à sa périphérie externe, au moins une échancrure (61) par laquelle elle est en prise, sans jeu, avec une telle patte axiale (59).

6. Volant amortisseur suivant l'une quelconque des revendications à 5, *caractérisé en ce que*, les moyens élastiques à action circonférentielle interposés entre les deux parties coaxiales (A, B) comportant des organes élastiques à action circonférentielle (27), qui, chacun individuellement, sont disposés dans des logements (28) ménagés pour eux dans la partie (A), et avec lesquels sont aptes à interférer des bras (35) appartenant au voile (25) que comporte la partie (B), avec un jeu circonférentiel entre lesdits organes élastiques (27) et lesdits bras (35), le jeu circonférentiel (J2) des moyens d'engagement à jeu prévus entre l'un des flasques (12, 12') de ladite partie (A) et la rondelle de frottement (50) établie entre ledit voile (25) et une bride (51) associée à celui-ci est globalement au moins égal à celui (J1) prévu entre lesdits organes élastiques (27) et lesdits bras (35).

7. Volant amortisseur suivant l'une quelconque des revendications 1 à 6, *caractérisé en ce que*, les moyens élastiques à action circonférentielle interposés entre les deux parties coaxiales (A, B) comportant des organes élastiques à action circonférentielle (27), qui, chacun individuellement, sont disposés dans des logements (28) ménagés pour eux dans la partie (A), la périphérie externe de la rondelle de frottement (50) s'étend sur une circonférence de diamètre inférieur à celle suivant laquelle s'étendent lesdits logements (28).

8. Volant amortisseur suivant l'une quelconque des revendications 1 à 7, *caractérisé en ce que* la bride (51) est d'un seul tenant avec un moyeu (18) sur lequel est calé en rotation le voile (25), en s'étendant, comme lui, radiale ment en direction opposée à l'axe de l'ensemble à compter de ce moyeu (18).

9. Volant amortisseur suivant la revendication 8, *caractérisé en ce que* le voile (25) est axialement pincé entre le moyeu (18) et un flasque (21), en étant solidarisé en rotation à ce moyeu (18) et à ce flasque (21) par des vis (22) qui les relient l'un à l'autre.

**Patentansprüche**

1. Dämpfungsschwungrad für Getriebe, insbesondere für ein Kraftfahrzeug, von der Art, die zwei koaxiale Teile (A, B) enthält, welche im Verhältnis zueinander drehbeweglich angebracht sind, d.h. einen ersten Teil (A), der ringförmig zwei in einem Abstand zueinander angeordnete Flansche (12, 12') enthält, und einen zweiten Teil (B), der zwischen den genannten Flanschen (12, 12') ringförmig eine Abdeckung (25) aufweist, wobei für den Eingriff zwischen den genannten koaxialen Teilen (A, B) einerseits am Umfang wirksame elastische Mittel und andererseits Reibmittel vorgesehen sind, wobei die genannten Reibmittel wenigstens eine Reibscheibe (50) enthalten, die für eine Gleitbewegung um die Achse des Ganzen angebracht ist, *dadurch gekennzeichnet*, daß die genannte Reibscheibe (50) axial zwischen der Abdeckung (25), die zu einem der betreffenden koaxialen Teile (A, B) gehört, und einem ringförmigen Flansch (51) angeordnet ist, der drehbeweglich mit der genannten Abdeckung (25) verbunden ist und in Verbindung mit letzterem das Eingreifen von Reibmitteln gestattet, zu denen er gehört, und daß sie frei um die Achse des Ganzen gleitend angebracht ist, ohne daß die am Umfang wirksamen elastischen Mittel gleichzeitig zusammengedrückt würden, und mit am Umfang eingreifenden, mit Spiel versehenen Mitteln (59, 60) zwischen dieser und einem der Flansche (12, 12') , der zu dem anderen der genannten koaxialen Teile (A, B) gehört.

2. Dämpfungsschwungrad nach Anspruch 1, *dadurch gekennzeichnet*, daß die genannten, mit Spiel versehenen, am Umfang eingreifenden Mittel (59, 60) wenigstens eine axiale Lasche (59) enthalten, mit der die betreffende Reibscheibe (50) drehbeweglich verbunden ist, sowie eine Aussparung (60), die in einem der Flansche (12, 12') des entsprechenden koaxialen Teils (A) angebracht ist und worin die genannte axiale Lasche (59) mit Spiel eingreift.

3. Dämpfungsschwungrad nach Anspruch 2, *dadurch gekennzeichnet*, daß die Aussparung (60) , die der genannte Flansch (12, 12') aufweist, eine kreisförmig verlängerte längliche Aussparung ist.

4. Dämpfungsschwungrad nach einem der Ansprüche 1 bis 3, *dadurch gekennzeichnet*, daß zwischen der zu einem der koaxialen Teile (A, B) gehörenden Abdeckung (25) und dem Flansch (51), der dieser zugeordnet ist, zwei Reibscheiben (50, 54) vorhanden sind, die drehbeweglich miteinander verbunden sind, und daß zwischen diesen axial wirkende elastische Mittel angeordnet sind.

5. Dämpfungsschwungrad nach Anspruch 2 und 4 in Verbindung miteinander, *dadurch gekennzeichnet*, daß, während die eine (50) der Reibscheiben am äußeren Umfang wenigstens eine axiale Lasche (59) aufweist, die andere (54) am äußeren Umfang wenigstens eine halbmondförmige Aussparung (61) besitzt, über die sie spielfrei mit einer solchen axialen Lasche (59) in Eingriff steht.

6. Dämpfungsschwungrad nach einem der Ansprüche 1 bis 5, *dadurch gekennzeichnet*, daß die zwischen den beiden koaxialen Teilen (A, B) eingesetzten, am Umfang wirksamen elastischen Mittel am Umfang wirksame elastische Organe (27) besitzen, die jeweils einzeln in Aufnahmen (28) sitzen, welche für sie im Teil (A) vorgesehen sind und mit denen zur Abdeckung (25) gehörige Arme (35) zusammenwirken können, die der Teil (B) aufweist, mit einem Umfangsspiel zwischen den genannten elastischen Organen (27) und den genannten Armen (35), und wobei das Umfangsspiel (J2) der mit Spiel versehenen Eingriffsmittel zwischen dem einen der Flansche (12, 12') des genannten Teils (A) und der Reibscheibe (50) zwischen der genannten Abdeckung (25) und einem zugehörigen Flansch (51) im wesentlichen wenigstens gleich dem Spiel (J1) ist, das zwischen den genannten elastischen Organen (27) und den genannten Armen (35) vorgesehen ist.

7. Dämpfungsschwungrad nach einem der Ansprüche 1 bis 6, *dadurch gekennzeichnet*, daß die am Umfang wirksamen elastischen Mittel, die zwischen den beiden koaxialen Teilen (A, B) eingesetzt sind, am Umfang wirksame elastische Organe (27) aufweisen, die jeweils einzeln in Aufnahmen (28) sitzen, die dafür im Teil (A) angebracht sind, wobei sich der Außenumfang der Reibscheibe (50) über einen Kreisumfang erstreckt, dessen Durchmesser geringer ist als derjenige des Umfangs, über den sich die genannten Aufnahmen (28) erstrecken.

8. Dämpfungsschwungrad nach einem der Ansprüche 1 bis 7, *dadurch gekennzeichnet*, daß der Flansch (51) aus einem Stück mit einer Nabe (18) besteht, woran drehbar die Abdeckung (25) verkeilt ist, die sich ebenfalls radial in der der Achse des Ganzen, von dieser Nabe (18) aus gesehen, entgegengesetzten Richtung erstreckt.

9. Dämpfungsschwungrad nach Anspruch 8, *dadurch gekennzeichnet*, daß die Abdeckung (25) axial zwischen der Nabe (18) und einem Flansch (21) eingeklemmt ist und daß sie drehbeweglich mit dieser Nabe (18) und diesem Flansch (21) durch Schrauben (22) verbunden ist, die diese miteinander verbinden.

**Claims**

1. A damped flywheel for a transmission, especially for an automotive vehicle, of the kind comprising two coaxial parts (A, B) mounted for rotation with respect to each other and comprising a first part (A) which comprises two annular plates (12, 12') spaced from each other, and a second part (B) which includes a support ring (25) arranged between the said annular plates (12, 12'), together with circumferentially acting resilient means and friction means, both of which are adapted to act between the said coaxial parts (A, B), with the said friction means comprising at least one friction ring (50) mounted around the axis of the assembly for sliding movement thereon, *characterised in that* the said friction ring (50) is disposed axially between the support ring (25) forming part of one of the said coaxial parts (A, B) and an annular flange (51) which is fixed with respect to the said support ring (25) for rotation therewith, the friction ring being such as to allow the friction means of which it forms a part to act in cooperation with the said support ring, and in that the friction ring is mounted around the axis of the assembly so as to be free to slide without there being any concomitant compression of the circumferentially acting resilient means, and circumferential loose coupling means (59, 60) defining a clearance being provided between the friction ring and one of the said annular plates (12, 12') which are comprised in the other one of the said coaxial parts (A, B).

2. A damped flywheel according to claim 1, *characterised in that* the said circumferential loose coupling means (59, 60) defining a clearance comprise at least one axial tab (59), with respect to which the said friction ring (50) is fixed for rotation therewith, and an aperture (60) which is formed in one of the said annular plates (12, 12') of the corresponding coaxial part (A), and in which the said axial tab (59) is engaged so as to define a clearance.

3. A damped flywheel according to claim 2, *characterised in that* the aperture (60) formed in the said annular plate (12, 12') is a circumferentially elongated slot.

4. A damped flywheel according to any one of claims 1 to 3, *characterised in that*, between the support ring (25) which is comprised in one of the coaxial parts (A, B) and the flange (51) which is associated with it, there are two friction rings (50, 54), which are coupled together for simultaneous rotation, and between which there are disposed axially acting resilient means.

5. A damped flywheel according to claims 2 and 4 in combination, *characterised in that*, when one (50) of the said friction rings has at least one axial tab (59) on its outer periphery, the other one (54) has at least one slot (61) on its outer periphery, being engaged without clearance in the said slot or slots by a said axial tab (59).

6. A damped flywheel according to any one of claims 1 to 5, *characterised in that* the circumferentially acting resilient means interposed between the two coaxial parts (A, B) comprise circumferentially acting resilient members (27) each of which is individually disposed in one of a plurality of housings (28) formed for them in the part (A), with arms (35), which form part of the support ring (25) comprised in the part (B), being adapted to act with the said circumferentially acting resilient members (27), there being a circumferential clearance between the said resilient members (27) and the said arms (35), the circumferential clearance (J2) of the loose coupling means provided between one of the annular plates (12, 12') of the said part (A) and the friction ring (50), established between the said support ring (25) and a flange (51) associated with the latter, is generally at least equal to the circumferential clearance (J1) which is provided between the said resilient members (27) and the said arms (35).

7. A damped flywheel according to any one of claims 1 to 6, *characterised in that* the circumferentially acting resilient means interposed between the two coaxial parts (A, B) comprise circumferentially acting resilient members (27) each of which is individually disposed in one of a plurality of housings (28) formed for them in the part (A), the outer periphery of the friction ring (50) extending along a circumference of smaller diameter than that along which the said housings (28) extend.

8. A damped flywheel according to any one of claims 1 to 7, *characterised in that* the flange (51) is integral with a hub (18), on which the support ring (25) is mounted for rotation therewith, and, like the latter, extends radially in a direction opposite to the axis of the assembly with reference to the said hub (18).

9. A damped flywheel according to claim 8, *characterised in that* the support ring (25) is axially gripped between the hub (18) and a wheel member (21), while being secured to the said hub (18) and the said wheel member (21), for rotation therewith, by means of screws (22) which fasten them together.

FIG.1

## FIG.2

## FIG.3